# EUROPEAN PATENT APPLICATION

(11) **EP 1 767 601 A1**
(43) Date of publication of application: **28.03.2007**
(21) Application number: 05751573.6
(22) Date of filing: 15.06.2005
(51) Int. Cl.: C09D 183/04, C09D 5/00, D06M 13/513, D06M 101/00

(54) **METAL SURFACE-TREATING AGENTS FOR PROMOTING ADHESION BETWEEN RUBBER AND THE METAL**

(30) Priority: 25.06.2004 JP 2004187218
(71) Applicant: Nippon Mining & Metals Co., Ltd., Minato-ku Tokyo 105-0001 (JP); Bridgestone Corporation, Tokyo 104-8340 (JP)
(72) Inventor: Imori, Toru, c/o Isohara Plant, Nikko Mat. Co. Ltd, Kitaibaraki-shi, Ibaraki 3191535 (JP); Suzuki, Jun, c/o Isohara Plant, Nikko Mat. Co. Ltd, Kitaibaraki-shi, Ibaraki 3191535 (JP); Iida, Kazunori, c/o Isohara Plant, Nikko Mat., Kitaibaraki-shi,Ibaraki 3191535 (JP)
(74) Representative: Sommer, Andrea
(86) International application number: PCT/JP2005/010915
(87) International publication number: WO 2006/001199

(57) **Abstract**

A surface treatment agent for metal is provided which is capable of improving the strength of adhesion between metal and rubber. A metal surface treatment agent for promoting adhesion between the metal and rubber comprising a cobalt or other metal compound and a silane coupling agent having a metal-capturing functional group in the molecule, and a metal surface treatment agent for promoting adhesion between the metal and rubber comprising a silane coupling agent having in the molecule a metal-capturing functional group with a captured metal such as a cobalt. The metal-capturing functional group is preferably an amino, amide or azole group.

## Description

### TECHNICAL FIELD

The present invention relates to a metal surface treatment agent for promoting adhesion which increases the strength of adhesion of a rubber with a metal and with a steel cord in particular, and to a rubber-metal composite the adhesive strength of which has been improved thereby.

### BACKGROUND ART

Conventionally, cobalt soaps such as cobalt naphthenate and cobalt stearate have been added to rubber to improve the strength of adhesion between the rubber and steel cord. Although initial adhesion is fairly good, the added cobalt compounds have sometimes been a contributing factor in deterioration of the rubber.
In the past few efforts have been made to improve the adhesive properties between rubber and steel cords by means of surface treatment of the steel cord, but the following examples have been reported. In Patent Document 1, it is disclosed that initial strength of adhesion between a metal and a silicon rubber or other polymer is improved by coating the metal surface with a thin film of an aminoalkyl silicone comprising an aminoalkylsilyl group.

In Patent Document 2, it is disclosed that good adhesive properties are obtained by a 3-step treatment in which a metal surface is cleaned with an aqueous acid or alkaline cleaning composition and then water washed, treated with an aminoalkylsilane, and then treated with resorcinol-formaldehyde-latex. In Patent Document 3, it is disclosed that good adhesive properties are achieved by treatment with an aminosilane and particularly with the special silane coupling agent N-β-(N-vinylbenzylamino)ethyl-γ-aminopropyl-trimethoxysilane hydrochloride.
Patent Document 1: U.S. Patent Specifications No. 3088847
Patent Document 2: U.S. Patent Specifications No. 4052524
Patent Document 3: U.S. Patent Specifications No. 4441946

### DISCLOSURE OF THE INVENTION

### PROBLEMS THAT THE INVENTION IS TO SOLVE

However, in the examples described above it was not possible to ensure adequate adhesion properties, and although there were effects they have still not been put to practical use.
Under these circumstances it is an object of the present invention to provide a metal surface treatment agent capable of improving the strength of adhesion between rubber and metal.

### MEANS FOR SOLVING THE PROBLEMS

The inventors studied how to ensure adequate adhesion properties between rubber and metal and arrived at the present invention upon discovering that good adhesion properties could be achieved by surface treating the metal with a surface treatment agent comprising a metal compound and a silane coupling agent having a metal-capturing functional group in the molecule.

That is, the present invention relates to:
[1] A metal surface treatment agent for promoting adhesion between rubber and metal, comprising a metal compound and a silane coupling agent having a metal-capturing functional group in the molecule.
[2] A metal surface treatment agent for promoting adhesion between rubber and metal, comprising a silane coupling agent having in the molecule a metal-capturing functional group having a captured metal.
[3] The metal surface treatment agent for promoting adhesion between rubber and metal according to [1] or [2] above, wherein the metal-capturing functional group is at least one functional group selected from the group consisting of an amino group, an amide group and an azole group.
[4] The metal surface treatment agent for promoting adhesion between rubber and metal according to [1] above, wherein the metal compound is at least one metal compound selected from the group consisting of cobalt, nickel, aluminum, zinc, copper, tin, palladium, silver, titanium, molybdenum, barium, magnesium, calcium, strontium, beryllium and cerium compounds.
[5] The metal surface treatment agent for promoting adhesion between rubber and metal according to [2] above, wherein the metal is at least one metal selected from the group consisting of cobalt, nickel, aluminum, zinc, copper, tin, palladium, silver, titanium, molybdenum, barium, magnesium, calcium, strontium, beryllium and cerium.
[6] A metal surface treatment agent for promoting adhesion between rubber and metal according to any of [1] through [5] above, wherein the metal to be bonded to rubber is steel cord.
[7] A rubber-metal composite using a metal treated with the surface treatment agent according to any of [1] through [6] above.

### EFFECTS OF THE INVENTION

The strength of adhesion between rubber and metal can be dramatically improved through the use of the surface treatment agent of the present invention. It is hypothesized that the metal captured by the metal-capturing functional group has the effect of promoting vulcanization bonding between the rubber and metal, and when metal is captured by the metal-capturing functional group this catalytic metal is concentrated at the boundary between the rubber and metal where the catalytic metal is needed, so that the added catalytic metal can be used effectively, thus improving the adhesion characteristics. Moreover, because in the present invention there is no need to add a cobalt compound to the rubber material, it is possible to prevent deterioration of the rubber due to this compound.

### BEST MODE FOR CARRYING OUT THE INVENTION

In the present invention it was discovered that vulcanization bonding of rubber and metal could be promoted by causing a silane coupling agent having a metal-capturing functional group with captured metal in the molecule to adhere to the surface of a metal to be bonded with rubber. The silane coupling agent having metal captured by a metal-capturing functional group can be made to adhere to the surface of a metal to be bonded with rubber by surface treating the metal either with a surface treatment agent comprising the silane coupling agent having a metal-capturing functional group with captured metal in the molecule or with a surface treatment agent comprising the silane coupling agent having a metal-capturing functional group in the molecule and a metal compound.

The silane coupling agent having a metal-capturing functional group in the molecule which is used in the present invention is preferably a silane coupling agent having at least one functional group selected from the group consisting of an amino group, an amide group and an azole group as the aforementioned metal-capturing functional group.
Examples of silane coupling agents having azole or amino groups include compounds obtained by the reaction of an azole compound or amine compound with an epoxy-silane compound.

Examples of azole compounds include imidazole, oxazole, thiazole, selenazole, pyrazole, isoxazole, isothiazole, triazole, oxadiazole, thiadiazole, tetrazole, oxatriazole, thiatriazole, bendazole, indazole, benzimidazole, benzotriazole and the like. Although the azole compounds are restricted to these compounds, imidazole is especially preferable. Examples of amine compounds include propylamine and other saturated hydrocarbon amines, vinylamine and other unsaturated hydrocarbon amines and phenylamine and other aromatic amines and the like. The amine is preferably primary or secondary. Favorable characteristics are hard to obtain with tertiary amines, which have weak coordinating ability.

The aforementioned silane coupling agent is a compound having a -SiX₁X₂X₃ group in addition to a metal-capturing functional group derived from the aforementioned azole compound, amine compound or the like, with X₁, X₂ and X₃ being alkyl groups, halogens, alkoxy groups or the like as long as they are functional groups which can be fixed on a surface. X_{1,} X₂ and X₃ may be the same or different.

The aforementioned silane coupling agent can be obtained by reacting the aforementioned azole compound or amine compound with an epoxy-silane compound.
The epoxy coupling agent represented by 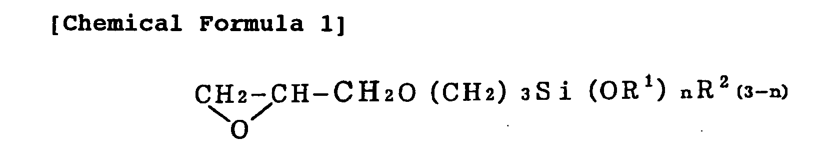 (wherein R¹ and R² are hydrogen atoms or alkyl groups with 1 to 3 carbon atoms, and n is 0-3) is desirable as this epoxy-silane compound, and a 3-glycidoxypropylalkoxysilane compound is more desirable.

The aforementioned azole compound and the aforementioned epoxy group-containing silane compound can be reacted for example under the conditions described in Japanese Patent Laid-open No. H6-256358.
For example, 0.1 to 10 moles of an epoxy group-containing silane compound can be dripped into 1 mole of the azole compound at 80 to 200°C, and reacted for 5 minutes to 2 hours. In this case there is no particular need for a solvent, but an organic solvent such as chloroform, dioxane, methanol, ethanol or the like may be used.

A reaction of imidazole and an epoxy-silane compound is shown below as a particularly desirable example. 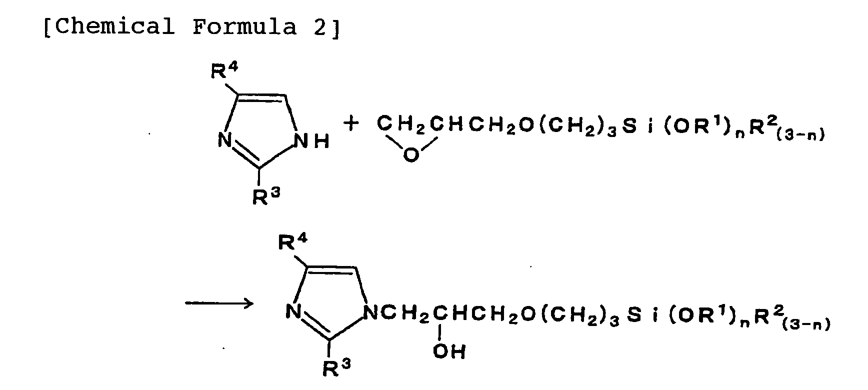 (wherein R¹ and R² are each hydrogen or an alkyl group with 1 to 3 carbon atoms, R³ is hydrogen or an alkyl group with 1 to 20 carbon atoms, R⁴ is a vinyl group or an alkyl group with 1 to 5 carbon atoms, and n is 0-3).

Other examples of silane coupling agents having metal-capturing functional groups include γ-aminopropyltriethoxysilane, γ-aminopropyltrimethoxysilane, N-methylaminopropylmethyldimethoxysilane, N-methylaminopropyltrimethoxysilane, urea propyltriethoxysilane, urea propyltrimethoxysilane, bis(trimethoxysilylpropyl)amine, bis[3-(trimethoxysilyl)propyl]ethylenediamine, γ-mercaptopropyltrimethoxysilane and the like.

Compounds of cobalt, nickel, aluminum, zinc, copper, tin, palladium, silver, titanium, molybdenum, barium, magnesium, calcium, strontium, beryllium and cerium are desirable as metal compounds to use in the present invention. Specifically, acetates, sulfates, hydrochlorides and fatty acid salts of these metals can be used, and specific examples of cobalt compounds include cobalt acetate, cobalt propionate, cobalt sulfate, cobalt chloride, cobalt octylate and the like.

The surface treatment agent of the present invention is used as a solution of the silane coupling agent having a metal-capturing functional group, and from the standpoint of stability and solubility of the silane coupling agent and metal compound an aqueous solution is desirable, but depending on solubility an organic alcohol solvent such as methanol, ethanol, isopropanol, octyl alcohol or the like or an organic aromatic solvent such as toluene, xylene or the like can also be used. For example, when a fatty acid salt which has low solubility in water is used as the metal compound, an organic solvent can be used.
The concentration of the silane coupling agent with metal-capturing ability in the surface treatment agent is preferably 0.001 to 10% by weight, although not limited thereto. Below 0.001% by weight effects are hard to achieve because the amount of the compound adhering to the surface of the base material tends to be small. Above 10% by weight too much adheres, making drying difficult. The concentration of the metal compound added to the silane coupling agent with metal-capturing ability is preferably 0.001 g/L to 100 g/L or more preferably 0.1 g/L to 10 g/L of the metal. Effects can be achieved outside this range, but the aforementioned range is preferred considering the effect on aftertreatment.

Examples of the metal which is bonded to rubber in the present invention include steel, copper, aluminum, zinc and the like. To promote adhesion, the metal surface is preferably subjected to a plating treatment, especially preferably a brass plating treatment, before being surface treated with the surface treatment agent. This surface treatment can be accomplished by dipping the metal in a solution of the surface treatment agent in water, an organic alcohol solvent such as methanol, ethanol or the like or an aromatic organic solvent such as toluene, xylene or the like, or by applying the aforementioned solution to the metal.
There are no particular limitations on the rubber which is bonded with the metal used in the present invention, and natural rubber and various synthetic rubbers such as polyisoprene rubber, polybutadiene rubber, styrene-butadiene rubber and the like can be used.
Moreover, the aforementioned rubber can be used as a rubber composition to which commonly used necessary additives such as vulcanizing agents, vulcanization accelerators and the like have been added.

### EXAMPLES

The present invention is explained in detail below using examples and comparative examples.

### (Comparative Example 1)

1 x 5 x 0.25 mm steel cord plated with brass (Cu about 70%, Zn about 30%) was treated with the surface treatment agent 1 shown in Table 1, air dried and embedded in the rubber composition shown in Table 2, and vulcanized for 20 minutes at 60°C to prepare samples of rubber composition sandwiched with steel cord. Each resulting sheet sample was then pull-out tested according to the methods described in ASTM-2229, and the pull-out force and rubber coverage as measures of the strength of adhesion of the rubber with the steel cord were expressed as indices in comparison with an untreated blank. The results are shown in Table 3. Rubber coverage is a measure of the amount of rubber remaining on the metal after detachment of the bonded surfaces of the metal and the rubber, and the higher the rubber coverage, the better the adhesiveness.

### (Example 1)

Comparative Example 1 was followed except that 1 x 5 x 0.25 mm steel cords plated with brass (Cu about 70%, Zn about 30%) were treated with the surface treatment agent 2 shown in Table 1. The results are shown in Table 3.

### (Example 2)

Comparative Example 1 was followed except that 1 x 5 x 0.25 mm steel cords plated with brass (Cu about 70%, Zn about 30%) were treated with the surface treatment agent 3 shown in Table 1. The results are shown in Table 3.

**[Table 1]**

**Table 1 Surface Treatment Agents**

| | Coupling agent | Metal |
|---|---|---|
| Blank | -- | -- |
| Surface treatment agent 1 | γ-aminosilane^{*1} 100 mg/L | -- |
| Surface treatment agent 2 | γ-aminosilane^{*1} 100 mg/L | Cobalt acetate (1 g/L as Co) |
| Surface treatment agent 3 | Imidazole-silane^{*2} 100 mg/L | Cobalt acetate (1 g/L as Co) |

| | | |
|---|---|---|
| *1 γ-aminosilane: γ-aminopropyltrimethoxysilane *2 Imidazole-silane: product of reaction of imidazole and 3-glycidoxypropyltrimethoxysilane | | |

The coupling agent and metal were both used as aqueous solutions.

**[Table 2]**

**Table 2 Rubber Compositions**

| Additive | Added amount (parts by weight) |
|---|---|
| Natural rubber (RSS #3) | 100 |
| Carbon black (Seast H) | 55 |
| Zinc oxide (ZnO #1) | 5 |
| Insoluble sulfur | 5 |
| Antioxidant (Antage 3C) | 1 |
| Vulcanization accelerator (Accel DZ-G) | 1 |

**[Table 3]**

**Table 3 Rubber Pull-out Test Results (index: compared to blank)**

| | | Pull-out force (kgf) | Rubber coverage (%) |
|---|---|---|---|
| | Blank | 100 | 100 |
| Comparative Example 1 | Surface treatment agent | 114 | 117 |
| Example 1 | Surface treatment agent 2 | 130 | 167 |
| Example 2 | Surface treatment agent 3 | 135 | 185 |

### (Example 3)

Example 1 was followed except that 1 x 5 x 0.25 mm steel cords plated with brass (Cu about 70%, Zn about 30%) were treated with the surface treatment agent 4 shown in Table 4. The results are shown in Table 5. Results in Table 5 are shown in index against a value of 100 for a blank which was handled in the same way without a surface treatment agent for purposes of comparison.

### (Example 4)

Example 3 was followed except that 1 x 5 x 0.25 mm steel cords plated with brass (Cu about 70%, Zn about 30%) were treated with the surface treatment agent 5 shown in Table 4. The results are shown in Table 5.

### (Example 5)

Example 3 was followed except that 1 x 5 x 0.25 mm steel cords plated with brass (Cu about 70%, Zn about 30%) were treated with the surface treatment agent 6 shown in Table 4. The results are shown in Table 5.

### (Example 6)

Example 3 was followed except that 1 x 5 x 0.25 mm steel cords plated with brass (Cu about 70%, Zn about 30%) were treated with the surface treatment agent 7 shown in Table 4. The results are shown in Table 5.

### (Example 7)

Example 3 was followed except that 1 x 5 x 0.25 mm steel cords plated with brass (Cu about 70%, Zn about 30%) were treated with the surface treatment agent 8 shown in Table 4. The results are shown in Table 5.

### (Example 8)

Example 3 was followed except that 1 x 5 x 0.25 mm steel cords plated with brass (Cu about 70%, Zn about 30%) were treated with the surface treatment agent 9 shown in Table 4. The results are shown in Table 5.

**[Table 4]**

**Table 4 Surface Treatment Agents**

| | Coupling agent | Metal |
|---|---|---|
| Surface treatment agent 4 | γ-aminosilane^{*1} 100 mg/L | Ba acetate (1 g/L as Ba) |
| Surface treatment agent 5 | γ -aminosilane^{*1} 100 mg/L | Zn acetate as dihydrate (1 g/L as Zn) |
| Surface treatment agent 6 | γ-aminosilane^{*1} 100 mg/L | Ag acetate (0.05 g/L as Ag |
| Surface treatment agent 7 | Imidazole-silane ^{*2} 100 mg/L | Mg acetate (1 g/L as Mg) |
| Surface treatment agent 8 | *γ*-aminosilane^{*1} 100 mg/L | Ca acetate monohydrate (1 g/L as Ca) |
| Surface treatment agent 9 | γ-aminosilane^{*1} 100 mg/L | Ce acetate monohydrate (1 g/L as Ce) |

| | | |
|---|---|---|
| *1 γ-aminosilane: γ-aminopropyltrimethoxysilane *2 Imidazole-silane: product of reaction of imidazole and 3-glycidoxypropyltrimethoxysilane | | |

Both the coupling agent and metal were used as aqueous solutions.

**[Table 5]**

**Table 5 Rubber Pull-out Test Results (index: comparison with blank)**

| | | Pull-out force (kgf) | Rubber coverage (%) |
|---|---|---|---|
| | Blank | 100 | 100 |
| Example 3 | Surface treatment agent 4 | 144 | 141 |
| Example 4 | Surface treatment agent 5 | 140 | 132 |
| Example 5 | Surface treatment agent 6 | 148 | 127 |
| Example 6 | Surface treatment agent 7 | 121 | 103 |
| Example 7 | Surface treatment agent 8 | 125 | 97 |
| Example 8 | Surface treatment agent 9 | 129 | 94 |

## Claims

1. A metal surface treatment agent for promoting adhesion between rubber and metal, comprising a metal compound and a silane coupling agent having a metal-capturing functional group in the molecule.

2. A metal surface treatment agent for promoting adhesion between rubber and metal, comprising a silane coupling agent having in the molecule a metal-capturing functional group which has a captured metal.

3. The metal surface treatment agent for promoting adhesion between rubber and metal according to Claim 1 or 2, wherein the metal-capturing functional group is at least one functional group selected from the group consisting of an amino group, an amide group and an azole group.

4. The metal surface treatment agent for promoting adhesion between rubber and metal according to Claim 1, wherein the metal compound is at least one metal compound selected from the group consisting of cobalt, nickel, aluminum, zinc, copper, tin, palladium, silver, titanium, molybdenum, barium, magnesium, calcium, strontium, beryllium and cerium compounds.

5. The metal surface treatment agent for promoting adhesion between rubber and metal according to Claim 2, wherein the metal is at least one metal selected from the group consisting of cobalt, nickel, aluminum, zinc, copper, tin, palladium, silver, titanium, molybdenum, barium, magnesium, calcium, strontium, beryllium and cerium.

6. The metal surface treatment agent for promoting adhesion between rubber and metal according to any of Claims 1 through 5, wherein the metal to be bonded to rubber is steel cord.

7. A rubber-metal composite using a metal treated with the surface treatment agent according to any of Claims 1 through 6.
